(19) Europäisches Patentamt
European Patent Office
Office européen des brevets

(11) EP 1 603 966 B1

(12) **EUROPEAN PATENT SPECIFICATION**

(45) Date of publication and mention of the grant of the patent:
**06.05.2009 Bulletin 2009/19**

(21) Application number: **04717894.2**

(22) Date of filing: **05.03.2004**

(51) Int Cl.:
***C08G 73/00*** *(2006.01)* ***C08G 73/10*** *(2006.01)*
***C08F 20/00*** *(2006.01)* ***C08F 8/32*** *(2006.01)*
***C08F 8/00*** *(2006.01)*

(86) International application number:
**PCT/KR2004/000463**

(87) International publication number:
**WO 2004/083281 (30.09.2004 Gazette 2004/40)**

(54) **A PROCESS FOR PREPARATION OF POLYGLUTARIMIDE RESIN USING A FLUID OF SUPER CRITICAL CONDITION**

VERFAHREN ZUR HERSTELLUNG VON POLYGLUTARIMIDHARZ UNTER VERWENDUNG EINES FLUIDS IM ÜBERKRITISCHEN ZUSTAND

PROCEDE DE PREPARATION D'UNE RESINE DE POLYGLUTARIMIDE AU MOYEN D'UN FLUIDE A ETAT SUPERCRITIQUE

(84) Designated Contracting States:
**AT BE BG CH CY CZ DE DK EE ES FI FR GB GR HU IE IT LI LU MC NL PL PT RO SE SI SK TR**

(30) Priority: **17.03.2003 KR 2003016531**

(43) Date of publication of application:
**14.12.2005 Bulletin 2005/50**

(73) Proprietor: **LG Chem, Ltd.**
**Seoul 150-721 (KR)**

(72) Inventors:
- **PARK, Sang-Hyun**
  **Yuseong-gu,**
  **Daejeon 305-340 (KR)**
- **KIM, Dong-Ryul**
  **Yuseong-gu,**
  **Daejeon 305-721 (KR)**
- **LEE, Hee-Hyun**
  **Yuseong-gu,**
  **Daejeon 305-728 (KR)**
- **LEE, Min-Hee**
  **Yuseong-gu,**
  **Daejeon 305-340 (KR)**

(74) Representative: **Prinz & Partner**
**Patentanwälte**
**Rundfunkplatz 2**
**80335 München (DE)**

(56) References cited:
**EP-A2- 0 376 748**
**JP-A- 9 048 819**
**JP-A- 2002 338 624**
**US-A- 4 636 532**
**US-A- 5 232 985**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 603 966 B1

## Description

### Technical Field

The present invention relates to a method for preparing a polyglutarimide by imidizing an acrylic resin. More particularly, the present invention relates to a method for preparing a polyglutarimide by imidizing an acrylic resin, wherein unreacted materials and by-products are efficiently removed in order to produce a polyglutarimide having excellent optical properties.

### Background Art

In general, acrylic resins have excellent optical properties and weathering resistance and are produced at a low cost. However, they have a low heat resistance and thus are limited in their applications. Therefore, many attempts to overcome this shortcoming have been made by many acrylic resin production companies, including DUPONT in the USA since the 1930's.

Conventional methods for improving the heat resistance of acrylic resins include, for example, the method comprising the step of introducing a high polar functional group capable of increasing the intra-/intermolecular bonding energy, a functional group having high decomposition energy and a cyclic functional group into the backbone of acrylic resin so as to increase the resin stiffness, and thus to improve the heat resistance. Particularly, a great deal of research into methods of introducing an imide ring has been made.

A basic imidization reaction of a methacrylic resin with ammonia or with a primary amine is disclosed in US Patent No. 2,146,209 and No. 3,284,425, DE Patent No. 1,077,872 and No. 1,242,369, and GB Patent No. 926,629. GB Patent No. 1,045,229 discloses a method for forming an imide ring by heating a copolymer or a terpolymer of methacrylic acid and metahcrylonitrile at 180-300°C, while selectively using an organic solvent. DE Patent No. 1,247,517, No. 2,041,736 and No. 2,047,096 disclose a method for forming an imide structure by reacting a copolymer of methacrylamide and methyl methacrylate with ammonia in the presence of an inert solvent.

US Patent No. 5,350,808 describes an imide resin obtained by the imidization between an acrylic resin and ammonia or a primary amine, and the preparation method thereof. However, the method has disadvantages in that the reaction time is long, a method for removing the solvent is needed, and it is not amenable to being applied in a continuous process, because the reaction is carried out in the presence of an organic solvent.

US Patent No. 4,246,374 describes a method for forming an imide resin without using water or an organic solvent, wherein a polyglutarimide is formed by the reactive extrusion of methacrylic resin with anhydrous ammonia or an anhydrous primary amine. According to this method, resins having a high heat resistance, i.e., having a thermal decomposition temperature above 285°C at which said resins have a 1 wt% loss in air, can be obtained. However, the above method has problems in that the weathering resistance is decreased by methacrylglutar anhydride and amic acid produced as reaction intermediates, and the processability and compatibility with other resins are decreased due to the increase of melting viscosity.

In order to solve the aforesaid problems, US Patent No. 4,727,117 suggests a method for improving the weathering resistance and compatibility with other resins by the reactive extrusion of an imide resin with an alkylating agent or an esterifying agent for converting the anhydride and amic acid that causes the deterioration of physical properties into alkyl groups. However, this method has disadvantages in that unreacted primary amine and by-products such as a secondary amine and a tertiary amine produced during the imidization reaction may form a salt with amic acid as a reaction intermediate and remain in the final product, and thus cause the yellowing of imide resins, thus decreasing the light transmission.

In order to improve the optical properties of polyglutarimide, US Patent No. 5,159,058 and No. 5,126,409 disclose a method for preparing imide resins having good thermal stability and improved optical properties by kneading an imide resin with an extracting agent such as water, methanol, ethanol or a mixture thereof in the molten state to extract unreacted materials and by-products. However, this method has disadvantages in that it is difficult to remove the extracting agent, because a solvent having a relatively low vapor pressure such as water and an alcohol is used, the extruded strands may have bubbles, if the removal of the extracting agent is not sufficiently performed, and the waste solvent needs to be safely treated after used as the extracting agent.

Meanwhile, a supercritical fluid is a fluid that causes a great amount of change in its physical properties from the liquid state to the gas state, when the pressure is slightly changed near the critical point, and has properties of both a liquid and a gas. In particular, carbon dioxide is easily set to the supercritical state, because it has the critical temperature of 31°C and the critical pressure of 1070 psi. In addition, carbon dioxide is an environmental-friendly, non-toxic and non-inflammable solvent, it does not pollute the environment and the product, and it is not expensive. The supercritical carbon dioxide as described above has a high diffusion coefficient and solubility, and provides the effect of reducing the fluid viscosity and surface tension between materials.

It was found that the melt viscosity of polystyrene can be reduced by 80% by supercritical carbon dioxide, as determined through a slit die viscosimeter mounted on an single-screw extruder, according to [Joseph R. Royer et al., Journal of Polymer Science Part B: Polymer Physics, Vol. 38, 3168, 2000]. In addition, it was found that the melt viscosity of polymethyl methacrylate and that of polystyrene can be reduced by about 70% and about 56%, respectively, by introducing supercritical carbon dioxide, as determined through a slit die viscosimeter mounted on an single screw extruder, according to [mark D. Elkovitch et al., Polymer Engineering and Science, October 1999, Vol. 39, 2075]. Further, it was found that the melt viscosity of polymethyl methacrylate and that of polystyrene can be reduced by about 84% and about 70%, respectively, by injecting 2 parts by weight of the supercritical carbon dioxide to 100 parts by weight of the resin at the processing temperature of 200°C, as determined through a slit die viscosimeter mounted on a co-rotating twin screw extruder, according to [mark D. Elkovitch et al., Polymer Engineering and Science, October 2001, Vol. 41, 2108]. According to the research result obtained by Elkovitch et al., the solubility of carbon dioxide to polymethyl methacrylate, in the equilibrium state of 200°C and 1000 psi, is about 5.79 wt%.

D1 (US0376748) discloses in the example 1 a method for preparing a polyglutarimide from methyl methacrylate and methylamine.

However, D1 does not disclose the step of contacting the imidization product with a supercritical fluid to extract unreacted materials and by-products.

## Disclosure of the Invention

We found that, when a supercritical fluid, preferably supercritical carbon dioxide is used for the production of polyglutarimide, unreacted materials and by-products can be extracted more easily than in a conventional method as described above and the residue of used fluid can be recovered easily, thus improving the optical properties of polyglutarimide, as well as the melt viscosity of polyglutarimide can be reduced sufficiently to be applied in a low-temperature extrusion process so that the deterioration of physical properties caused by the thermal decomposition of polyglutarimide can be prevented.

Therefore, the present invention has been made in view of the above-mentioned points, and it is an object of the present invention to provide a method for preparing a polyglutarimide having excellent optical properties by removing unreacted materials and by-products using a supercritical fluid, preferably supercritical carbon dioxide.

According to an aspect of the present invention, there is provided a method for preparing a polyglutarimide comprising the steps of: (a) imidizing an acrylic resin; and (b) contacting the product obtained from step (a) with a supercritical fluid to extract unreacted materials and by-products.

According to another aspect of the present invention, there is provided a method for preparing a polyglutarimide comprising the steps of: (a) imidizing an acrylic resin; (b) contacting the product obtained from step (a) with a supercritical fluid to extract unreacted materials and by-products; and (c) alkylating the product obtained from step (b).

According to another aspect of the present invention, there is provided a method for preparing a polyglutarimide comprising the steps of: (a) imidizing an acrylic resin; (b) alkylating the product obtained from step (a); and (c) contacting the product obtained from step (b) with a supercritical fluid to extract unreacted materials and by-products.

According to another aspect of the present invention, there is provided a method for preparing a polyglutarimide comprising the steps of: (a) imidizing an acrylic resin; (b) contacting the product obtained from step (a) with a supercritical fluid to extract unreacted materials and by-products; (c) alkylating the product obtained from step (b); and (d) contacting the product obtained from step (c) with a supercritical fluid to extract unreacted materials and by-products.

The foregoing and other objects, features and advantages of the present invention will become more apparent from the following detailed description.

First, an acrylic resin is imidized in the method according to the present invention.

The imidization reaction may be performed with an imidizing agent and this reaction can be performed with a technique as known in the arts.

The acrylic resin that may be used in the imidization reaction has generally 25 to 100 wt%, preferably 50 to 100 wt%, more preferably 80 to 100 wt%, or the most preferably 95 to 100 wt% of ester groups derived from acrylic acid or methacrylic acid. The ester groups preferably have 1 to 20 carbon atoms, and methyl methacrylate (MMA) is more preferable. The acrylic resin preferably contains 80 wt% or more of methyl methacrylate, and may comprise an unsaturated monomer such as styrene, acrylonitrile and butadiene. Although acrylic resins having various molecular weights may be used in the present invention, the weight average molecular weight of the acrylic resin is preferably about 50,000 to 200,000, as determined by GPC (Gel Permeation Chromatography).

The imidizing agent for imidizing the acrylic resin may be ammonia, a primary amine or a mixture thereof, as represented by the following formula 1:

[formula 1] $R5\text{-}NH_2$

wherein, R5 is a hydrogen atom, or an alkyl, aryl or aralkyl having 1 to 20 of carbon atoms, or a combination thereof.

The ammonia or the primary amine is preferably anhydrous ammonia or anhydrous primary amine.

The particular examples for the imidizing agent include an aliphatic primary amine, for example a C1-C18 alkyl amine or alkene amine such as methylamine, ethylamine, etheneamine, arylamine, n-propylamine, isopropylamine, n-butylamine, isobutylamine, sec-butylamine, t-butylamine, pentylamine, hexylamine, 2-ethylhexylamine, cyclohexylamine, hepthylamine, octylamine, nonylamine, decylamine, dodecylamine, hexadecylamine and stearylamine; a (C1-C4)alkoxy(C1-C4)alkylamine such as methoxypropyl amine, ethoxypropyl amine, methoxybutyl amine and ethoxybutyl amine, or the like. Additionally, a primary amine having an aromatic group such as an aniline derivative, a naphthyl amine derivative, a benzyl amine derivative, etc. may be used as the imidizing agent. For example, o-ethyl aniline, p-ethyl aniline, m-ethyl aniline, o-propyl aniline, p-propyl aniline, m-propyl aniline, o-isopropyl aniline, p-isopropyl aniline, m-isopropyl aniline, o-n-butyl aniline, p-n-butyl aniline, m-n-butyl aniline, o-isobutyl aniline, p-isobutyl aniline, m-isobutyl aniline, o-t-butyl aniline, p-t-butyl aniline, m-t-butyl aniline, o-pentyl aniline, p-pentyl aniline, m-pentyl aniline, o-isopentyl aniline, p-isopentyl aniline, m-isopentyl aniline, o-s-pentyl aniline, p-s-pentyl aniline, m-s-pentyl aniline, o-t-pentyl aniline, p-t-pentyl aniline, m-t-pentyl aniline, 2,4-xylidine, 2,6-xylidine, 2,3-xylidine, 2-methyl-4-t-butyl aniline, 2,4-di-t-butyl aniline, 2,4,6-trimethyl aniline, 2,4,5-trimethyl aniline, 2,3,4-trimethyl aniline, 2,6-dimethyl-4-t-butyl aniine, 2,4,6-tri-t-butylaniline; a halogen aniline, such as o-chloroaniline, p-chloroaniline, m-chloroaniline, o-bromoaniline, p-bromoaniline, m-bromoaniline, o-fluoroaniline, p-fluoroaniline, m-fluoroaniline, 2,4-dichloroaniline, 2,6-dichloroaniline, 2,3-dichloroaniline, 2,4-dibromoaniline, 2,6-dibromoaniline, 2,3-dibromoaniline, 2,4-difluoroaniine, 2,6-difluoroaniline, 2,3-difluoroaniline, 2,4,6-trichloroaniline, 2,4,5-trichloroaniline, 2,3,4-trichloroaniline, 2,4,6-tribromoaniline, 2,4,5-tribromoaniline, 2,3,4-tribromoaniline, 2,4,6-trifluoroaniline, 2,4,5-trifluoroaniline, 2,3,4-trifluoroaniline, etc.; o-toluidine, p-touidine, m-toluidine, 4-nitro-2-toluidine, o-methoxyaniline, p-methoxyaniline, m-methoxyaniline, o-ethoxyaniline, p-ethoxyaniline, m-ethoxyaniline, o-propoxyaniline, p-propoxyaniline, m-propoxyaniline, alpha-naphthyl amine, beta-naphthyl amine, o-biphenyl amine, p-biphenyl amine, m-biphenyl amine, 4-ethoxyanilne phenylethyl amine, o-methylbenzyl amine, p-methylbenzyl amine, m-methylbenzyl amine, p-chlorobenzyl amine, dimethoxyphenylethyl amine, glycine, 3-aminoacetophenone, 2-aminoanthraquinone, p-aminobenzoic acid, 2-amino-4,6-dimethylpyridine, 3-aminophthalimide, 2-aminopyrimidine, 2-aminopyridine, 2-aminothiazole, 5-aminotetrazole, alanine, etc. may be used.

The said imidizing agent may be used in the state of vapor or liquid to perform imidization. Also, the mole ratio of the imidizing agent to the ester groups in the acrylic resin may be adjusted according to the desired degree of heat resistance, optical properties, processability, etc., of the target polyglutarimide. For example, the amount of the imidizing agent is 0.1-1.5 times, preferably 0.2-1 times of the ester groups in the acrylic resin, expressed in the mole ratio, although it is not particularly limited.

The reaction time, reaction temperature and the degree of reaction in the imidization may be determined as described in [Richard Legay, et al., 1999, Journal of Applied Polymer Science, vol. 76, p. 1876-1888] and US patent No. 4,246,374. Preferably, the imidization temperature is about 200°C to 400°C, more preferably 250°C to 350°C. The reaction time may be adjusted according to the amount of resin introduced, screw rotation speed, etc., and is preferably 0.1 sec. to 1000 sec., more preferably about 30 sec. to 300 sec. The degree of reaction may be controlled by changing the reaction time, the composition of reactants, the reaction temperature, or the like.

The degree of reaction (the degree of imidization) can be calculated from the elemental analysis for nitrogen content, as described in US patent No. 5,073,605. For example, an illustrative structure of the polyglutarimide that can be prepared according to the present invention is represented by the following formula 2:

[formula 2]

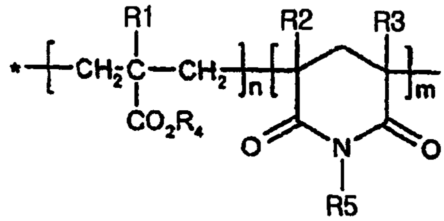

wherein, each of R1, R2 and R3 represents a hydrogen atom, or an alkyl, aryl, aralkyl or alkaryl having 1 to 20 of carbon atoms, or a combination thereof; R4 represents a hydrogen atom or an alkyl having 1 to 8 of carbon atoms; R5 is a hydrogen atom, or an alkyl, aryl or aralkyl having 1 to 20 of carbon atoms, or a combination thereof; and each of n and m is a mole ratio of each unit.

The polyglutarimide as represented by the formula 2 comprises an ester unit of acrylic resin and a glutarimide unit, and the relation of the said n and m defined as the mole ratio of each unit is expressed by the following formula 3:

[formula 3]

$$n + m = 1 \quad (0 \leq n \leq 1,\ 0 \leq m \leq 1)$$

The imidization ratio can be calculated from the following formula 4, when the nitrogen content obtained by the elemental analysis is taken as X(%):

[formula 4]

$$X(\%) = \frac{[Nm]}{[Im + nE]} 100$$

wherein, X(%) is nitrogen content, N is nitrogen atomic weight, I is molecular weight of glutarimide unit, E is molecular weight of acrylic ester unit, and m is the degree of imidization.

In the above formula 4, when the imidization is performed at 100 mol%, n is 0 in the above formula 2 representing polyglutarimide. When the imidizaton is performed at a lower degree, the ratio of m/n is determined by the degree of reaction. Generally, the ratio of m/n is about 9/1 to 1/9, preferably 4/3 to 3/4.

In the method for preparing a polyglutarimide according to the present invention, an additional alkylation reaction may be performed after imidizing the acrylic resin to remove amic acid and glutar anhydride as an imidization intermediate, so that the processability, weathering resistance and compatibility with other resins can be improved. Preferably, the alkylation reaction is performed after the completion of imidization. In addition, this additional alkylation reaction may be performed after the imidization, followed by removing unreacted materials and by-products by a supercritical fluid according to the present invention. The alkylation reaction may be performed as known to a person skilled in the art. For example, the alkylation reaction may be performed based on the description of US patent No. 4,727,117 and No. 4,954,574.

For the alkylation, an alkylating agent such as an orthoester, a ketal, a carbonate, a sulfoxide, etc. may be used. In addition to these, other reactants such as a siloxane, a silyl ether, a silylenol ether, a trialkyl phosphaste, a dialkyl sulfate, an alkyl alkylsulfonate, an alkyl arylsulfonate, a dialkyl carbonate, a diaryl carbonate, an aryl isocyanate, a carbodiimide, a trialkyl silyl halide, an enol ether, an alcohol, an alkyl ether, an alkyl isocyanate, a tertiary ammonium salt, an urea, a guanidine, etc. may be used to perform the alkylation. Particular examples for the reactants include: dimethyl carbonate, 2,2-dimethoxypropane, dimethyl sulfoxide, triethyl orthoformate, trimethyl orthoformate, diphenyl carbonate, dimethyl sulfate, methyl toluene sulfonate, methyl trifluoromethyl sulfonate, methylacetate, methanol, ethanol, methyl isocyanate, p-chlorophenyl isocyanate, dimethyl carbodiimide, dimethyl t-butylsilyl chloride, isopropenyl acetate, dimethyl urea, tetramethylammonium hydroxide, dimethyl diethoxysilane, tetra-n-butoxysilane, dimethyl (trimethylsilyl) phosphite, trimethyl phosphite, trimethyl phosphate, tricresyl phosphate, or the like.

As described above, the alkylating agent is used to improve the physical properties of polyglutarimide by alkylating the acid that is a by-product from imidization. Therefore, the alkylating agent is preferably introduced in an amount exceeding the amount of the acid. However, if the amount of the alkylating agent is too much, the optical properties of polyglutarimide may be deteriorated by thermal degradation of alkylating agent itself. Accordingly, the alkylating agent is used 1 to 10 times, preferably 1 to 5 times, more preferably 1 to 2 times based on the acid value of polyglutarimide.

The present invention is characterized in that a molten polyglutarimide obtained by imidization of an acrylic resin is contacted with a supercritical fluid to extract unreacted residual amines and by-products efficiently, so that the optical properties of polyglutarimide can be improved. Because a supercritical fluid has diffusion property similar to that of a gas and solubility similar to that of a liquid, the supercritical fluid can be diffused well in the molten polyglutarimide and can dissolve, absorb or entrain impurities well, and thus remove unreacted materials and by-products with ease. Preferably, the removal of unreacted materials and by-products by the supercritical fluid is performed after the imidization and/or after the alkylation.

Preferably, the supercritical fluid is carbon dioxide, because it has a good compatibility with polyglutarimide and amine so that it may be advantageously used to reduce the viscosity of resin and to extract the unreacted amine, and it can be controlled to the supercritical state with ease. Particularly, when the temperature and pressure inside of a reactor or an extruder in which the extraction is made are higher than 31.05°C and 7,38 MPa (1070.4 psi), i.e., the

supercritical point of carbon dioxide, carbon dioxide is very efficient as an extraction solvent, and the higher the pressure and density of carbon dioxide are, the higher the extraction efficiency is. Additionally, supercritical carbon dioxide may act as a plasticizer to reduce the melt viscosity of the molten polyglutarimide, and thus reduces the operation temperature during the extrusion of polyglutarimide. Accordingly, the deterioration of physical properties caused by thermal degradation can be reduced, since the extraction may be performed at a temperature lower than in the prior arts (US patent No. 5,159,058 and No. 5,126,409).

The extractor that may be used in the method for preparing polyglutarimide according to the present invention includes: an single screw extruder, a multi-screw extruder with two or more screws, an autoclave, a continuously recycled tubular reactor, a baffled in-line mixer that may be used successively to an extruder, or other types of melt mixing devices. Preferably, a single screw extruder or a multi-screw extruder with two or more screws is used. In addition, the method according to the present invention may be carried out in one extruder in which all of the imidization, alkylation and removal of unreacted materials and by-products are performed, or in two or more extruders connected successively to perform each of the reactions separately.

When the method according to the present invention is carried out in an extruder, the removal of unreacted materials and by-products by supercritical carbon dioxide may be performed according to a preferred embodiment of the present invention as follows.

In order to increase the pressure of carbon dioxide in the extruder, a suitable combination of screws, barrel constitution, amount of resin introduction, screw rotation speed and barrel temperature are needed. For example, in the combination of screws, a screw element capable of preventing the counter-flow of carbon dioxide toward a hopper and causing a strong resistance against the flow of carbon dioxide in the direction of resin extrusion may be inserted. By virtue of the said screw element, the barrier effect of the molten resin may be formed and the pressure inside of the barrier zone may be increased by the resin accumulated in the barrier and carbon dioxide. The pressure between barriers may be increased by reducing the temperature of barrier, by increasing the resin introduction amount and by reducing the screw rotation speed.

The said screw element capable of causing a strong resistance against the flow of resin in the direction of resin extrusion as above mentioned includes, for example, a counter conveying screw, a counter conveying kneading screw or a neutral kneading screw, however any element capable of acting as a barrier against the flow of materials inside of the extruder may be used. According to the present invention, the zone between the said barriers is defined as an extraction zone, in which carbon dioxide is present in the supercritical state for the purpose of reducing the melt viscosity of resin and to dissolve, absorb or entrain impurities such as unreacted amine and residual acrylic monomers.

Reducing the temperature in the extraction zone may be determined by considering a torque applied to a driving system of extruder according to the extrusion amount, introduction amount and density of supercritical carbon dioxide and viscosity of molten resin. Since the melt viscosity of resin is reduced by supercritical carbon dioxide in the extraction zone, the barrel temperature may be reduced in order to prevent the deterioration of optical properties caused by the thermal degradation of resin at a high temperature. Although the barrel temperature is not reduced, the possibility of causing the thermal degradation is relatively low, because supercritical carbon dioxide reduces the thermal stress of the resin. However, it is more efficient to reduce the barrel temperature in the range from 180°C to 300°C.

When the carbon dioxide introduction amount is determined, the following have to be taken into consideration: if the amount of carbon dioxide is too small, the effects of viscosity reduction and extraction are decreased; on the other hand, if the amount of carbon dioxide is too large, the pressure inside of the extraction zone is undesirably increased and the driving system and barrel may be damaged, and in particular, the barrier formed by molten resin may be momentarily broken, and thus the extrusion amount is changed greatly and the distribution of retention time of resin becomes broad so that uniform physical properties cannot be obtained and the extrusion cannot be performed safely. Suitably, the introduction amount of carbon dioxide is 0.1 to 50 parts by weight, preferably 1 to 10 parts by weight based on 100 parts by weight of acrylic resin or polyglutarimide.

The step of extracting unreacted materials and by-products by supercritical carbon dioxide is preferably performed in a zone directly after completing imidization and/or directly after completing alkylation substantially, wherein the extraction step may be performed using at least one vent in each zone. The supercritical carbon dioxide and impurities (unreacted materials and by-products) removed through such vents may be reutilized after separation. Because the separation of unreacted amine and carbon dioxide from the mixture removed through the vents may be performed by controlling pressure or temperature simply, it is easier than in the prior arts using water or an alcohol as an extracting agent, and the method according to the present invention is environmental-friendly process.

The polyglutarimide of the above formula 2 according to the present invention has a glass transition temperature (Tg) of 105°C to 200°C in accordance with the reaction degree (0 to 100 mole% of imide), and shows a thermal stability, in which 1 wt% of polyglutarimide is decomposed at 300°C or higher under nitrogen atmosphere, as determined by thermogravimetric analysis. The glass transition temperature is determined by DSC (Differential Scanning Calorimeter), the thermogravimetric analysis is performed with a thermogravimetric analyzer, and in both cases, the heating rate is 10°C per minute.

Best Mode for Carrying Out the Invention

Reference will now be made in detail to the preferred embodiments of the present invention. It is to be understood that the following examples are illustrative only and the present invention is not limited thereto.

EXAMPLE 1

To an inlet of a co-rotating complete mesh-type twin screw extruder having a diameter of 27 mm and a length of 1296 mm, methyl methacrylate/methyl acrylate copolymer having a weight average molecular weight of 160,000 and a glass transition temperature (Tg) of 112°C and comprising methyl methacrylate and methyl acrylate in the weight ratio of 96:4 (referred as methacrylic resin hereinafter) was continuously supplied, and methyl amine as an imidizing agent was introduced at the position corresponding to 13/48 of the screw in the direction of resin extrusion to perform imidization under the screw rotation speed of 200 rpm.

A counter-directional combination of screws were inserted over the range corresponding to 29/48 to 37/48 of the whole length of the screws in the direction of extrusion, so that an extraction zone by supercritical carbon dioxide could be formed, and carbon dioxide was introduced in the amount of 2.1 wt% based on the weight of the resin introduced to the extruder under the pressure of 4000 psi on the average. The barrel in the extraction zone using carbon dioxide was equipped with two pressure sensors at the position corresponding to 31/48 and 36/48 of the whole length of the screws, respectively, in the direction of extrusion in order to measure the pressure inside the barrel and to check the pressure of carbon dioxide inside the barrel. The average temperature in the extraction zone using carbon dioxide was set to 240°C.

The next zone was a depressurization zone for removing unreacted amine, by-products including a secondary amine and a tertiary amine and carbon dioxide, wherein low-molecular weight by-products such as unreacted imidizing agent, moistures, methanol, a secondary amine, a tertiary amine, etc., were removed from an atmospheric vent and a vacuum reduced-pressure vent of 50 mbar at the position corresponding to 39/48 and 42/48 of the whole length of the screws, respectively, in the direction of extrusion.

Then, molten resins were formed into strands through a nozzle, extruded, cooled in water bath, cut by a cutter and pelletized. Elemental analysis was performed for the reacted resins to quantitatively analyze the imidization ratio from nitrogen content (weight %), and the contents of unreacted imidizing agent and residual amines as by-products including a secondary amine and a tertiary amine were determined through gas chromatographic analysis.

COMPARATIVE EXAMPLE 1

EXAMPLE 1 was repeated, except that carbon dioxide was not introduced and the temperature of the extraction zone equaled to that of the reaction zone.

The following TABLE 1 describes reaction conditions, reaction degree (imidization ratio), glass transition temperature (Tg) and residual amine content in EXAMPLE 1 and COMPARATIVE EXAMPLE 1.

[TABLE 1]

| | Amine type | Amine Introduction amount (ml/min.) | Reaction temp. (°C) | Extraction temp. (°C) | Extraction pressure MPa (psi) | | Nitrogen content (wt%) | Imidization ratio (mol%) | Residual amine (wt%) | Tg (°C) |
|---|---|---|---|---|---|---|---|---|---|---|
| EX. 1 | Methyl amine | 34.2 | 300 | 240 | 15 | 2170 | 6.5 | 67.8 | 0.031 | 159 |
| COMP. EX.1 | | | | 300 | 3,5 | 510 | 6.5 | 67.8 | 0.132 | 161 |

Tg : glass transition temperature
Resin introduction amount : 33.3 g/min.
Carbon dioxide introduction amount : 3.3 wt%
Screw rotation speed : 200 rpm
The extraction temperature is the average of pressure values inside the extruder measured by two pressure sensors in the extraction zone.

As shown in TABLE 1, the use of supercritical carbon dioxide in the extraction zone reduced the residual amine (unreacted amine) content in polyglutarimide.

<u>EXAMPLES 2-4 AND COMPARATIVE EXAMPLES 2-4</u>

EXAMPLES 2-4 AND COMPARATIVE EXAMPLES 2-4 were performed as described in EXAMPLE 1 and COMPARATIVE EXAMPLE 1, respectively, except that the type of imidizing agent was varied as described in the following TABLE 2.

The following TABLE 2 describes reaction conditions, reaction degree, glass transition temperature and residual amine content in EXAMPLES 2-4 and COMPARATIVE EXAMPLES 2-4.

[TABLE 2]

| | Amine type | Amine introduction amount (ml/min.) | Reaction temp. (°C) | Extraction temp. (°C) | Extraction pressure MPa (psi) | | nitrogen content (wt%) | Imidization ratio (mol%) | Residual amine (wt%) | Tg (°C) |
|---|---|---|---|---|---|---|---|---|---|---|
| EX.2 | Isopropyl amine | 32.9 | 300 | 240 | 12,9 | 1870 | 6.4 | 81.5 | 0.047 | 159 |
| COMP. EX.2 | | | | 300 | 3,2 | 460 | 6.2 | 77.1 | 0.160 | 158 |
| ExX3 | Ammonia | 40.9 | 300 | 240 | 16,9 | 2450 | 4.7 | 41.1 | 0.020 | 158 |
| COMP. EX.3 | | | | 300 | 3,2 | 460 | 4.4 | 37.9 | 0.114 | 160 |
| EX.4 | Cyclohexyl amine | 44.1 | 300 | 240 | 10,1 | 1470 | 5.2 | 75.1 | 0.077 | 168 |
| COMP. EX.4 | | | | 300 | 3 | 430 | 5.4 | 81.2 | 0.225 | 170 |
| The resin introduction amount in each example is 33.3g/min. | | | | | | | | | | |

As shown in TABLE 2, EXAMPLES 2-4 reduced the residual amine amount compared with COMPARATIVE EXAMPLES 2-4, respectively.

EXAMPLES 5-11

EXAMPLE 1 was repeated, except that the screw rotation speed was 250 rpm and the type of imidizing agent and carbon dioxide introduction amount were varied as described in the following TABLE 3.

[TABLE 3]

| | Amine type | Amine introduction amount (ml/min.) | Screw rotation speed (RPM) | Reaction temp. (°C) | Extraction temp. (°C) | Carbon dioxide introduction amount (wt%) | Residual amine (wt%) | Tg (°C) |
|---|---|---|---|---|---|---|---|---|
| EX.5 | Isopropyl amine | 32.9 | 250 | 300 | 240 | 1.4 | 0.078 | 157 |
| EX.6 | Isopropyl amine | 32.9 | 250 | 300 | 240 | 2.1 | 0.044 | 156 |
| EX.7 | Isopropyl amine | 32.9 | 250 | 300 | 240 | 3.3 | 0.024 | 158 |
| EX.8 | Methyl amine | 25.6 | 250 | 300 | 240 | 2.2 | 0.035 | 162 |
| EX.9 | Methyl amine | 25.6 | 250 | 300 | 240 | 3.2 | 0.010 | 161 |
| EX.10 | Cyclohexyl amine | 44.1 | 250 | 300 | 240 | 2.0 | 0.092 | 175 |
| EX.11 | Cyclohexyl amine | 44.1 | 250 | 300 | 240 | 4.2 | 0.051 | 174 |
| The resin introduction amount is 33g/min. | | | | | | | | |

As shown in TABLE 3, the more the carbon dioxide introduction amount is, the more the residual amine content in polyglutarimide is reduced.

EXAMPLE 12

To an inlet of a co-rotating complete mesh-type twin screw extruder having a diameter of 27 mm and a length of 1296 mm, the polyglutarimide obtained from EXAMPLE 1 was continuously supplied, and an alkylating agent was introduced at the position corresponding to 13/48 of the whole length of the screws in the direction of resin extrusion to perform alkylation under the screw rotation speed of 200 rpm. The alkylating agent was dimethyl carbonate, the acid value of the polyglutarimide obtained from EXAMPLE 1 was 0.583 mmol/g and 150 mol% of dimethyl carbonate was introduced thereto. As an alkylation catalyst, 2 wt% of triethyl amine based on the weight of the alkylating agent was introduced in addition to the alkylating agent.

A counter-directional combination of screws were inserted over the range corresponding to 27/48 to 35/48 of the whole length of the screws in the direction of extrusion, so that an extraction zone by supercritical carbon dioxide and a low-temperature extrusion zone could be formed, and the barrel temperature was set to 240°C. The next zone following the position corresponding to 35/48 of the whole length of the screws was a depressurization zone for removing unreacted amine, by-products including a secondary amine and a tertiary amine and carbon dioxide, wherein low-molecular weight by-products such as unreacted imidizing agent, moistures, methanol, a secondary amine, a tertiary amine, etc., were removed from an atmospheric vent and a vacuum reduced-pressure vent of 50 mbar at the position corresponding to 39/48 and 42/48 of the whole length of the screws, respectively, in the direction of extrusion.

Then, low-molecular weight by-products such as unreacted imidizing agent, alkylating agent, moistures, methanol, a secondary amine, a tertiary amine, etc. were removed from a vent of the barrel equipped with a vacuum depressurizing device under the pressure of 50 mbar at the position corresponding to 10/11 of the whole length of the screws,

and molten resins were formed into strands through a nozzle, extruded, cooled in water bath, cut by a cutter and pelletized.

In order to determine the alkylation degree, 0.25 g of polyglutarimide was dissolved in 120 g of a solution containing toluene and isopropanol in the weight ratio of 1:1, and the solution was titrated with 0.1 N standard potassium hydroxide solution to determine the acid value.

In order to determine the optical properties, glutarimide resin was injection-molded into a specimen having a thickness of 3 mm, a length of 80 mm and a width of 40 mm, and the light transmission and the yellow index to a 3 mm of thickness were measured. For measuring the light transmission in the range of visible light (380-780 nm), Varian UV-Visible spectrometer was used. Additionally, the yellow index was determined by using Macbeth color eye 3100 according to ASTM D1925. The results for the optical properties were reported as the average value of at least five specimens and the light transmission value was represented as the average transmission in the range of 380 nm-400 nm.

EXAMPLE 13

EXAMPLE 12 was repeated, except that carbon dioxide was not introduced after the alkylation of the polyglutarimide obtained from EXAMPLE 1 and the temperature of the extraction zone equaled to that of the reaction zone.

EXAMPLE 14

EXAMPLE 12 was repeated, except that the polyglutarimide obtained from COMPARATIVE EXAMPLE 1 was used instead of the polyglutarimide obtained from EXAMPLE 1.

COMPARATIVE EXAMPLE 5

EXAMPLE 12 was repeated, except that the polyglutarimide obtained from COMPARATIVE EXAMPLE 1 was used instead of the polyglutarimide obtained from EXAMPLE 1, carbon dioxide was not introduced during the alkylation of the polyglutarimide obtained from COMPARATIVE EXAMPLE 1 and the temperature of the extraction zone equaled to that of the reaction zone. The following TABLE 4 describes the reaction conditions and the results for the measurement of physical properties.

[TABLE 4]

| | Alkylating agent introduction amount (ml/min.) | Reaction temp. (°C) | Carbon dioxide introduction amount (average) (wt%) | Average carbon dioxide pressure MPa (psi) | | | | Acid value (mmol /g) | Transmission (%T) | Yellow index (YI) | Residual amine (wt%) | Tg (°C) |
|---|---|---|---|---|---|---|---|---|---|---|---|---|
| | | | | Introduction | | Extraction | | | | | | |
| EX.12 | 2.5 | 300 | 3.5 | 34,5 | 5000 | 15,5 | 2250 | 0.010 | 88.5 | 2.8 | 0.005 | 153 |
| EX.13 | 2.5 | 300 | 0 | 0 | 0 | 3,8 | 550 | 0.021 | 86.5 | 4.1 | 0.014 | 152 |
| EX.14 | 2.5 | 300 | 3.5 | 34,5 | 5000 | 15,9 | 2310 | 0.016 | 86.7 | 4.0 | 0.031 | 153 |
| COMP EX. 5 | 2.5 | 300 | 0 | 0 | 0 | 3,6 | 530 | 0.036 | 85.4 | 4.9 | 0.047 | 154 |

The extraction temperature in each of EXAMPLES 12,13 and 14 is 240°C, and that in COMP. EX.6 is 300°C.
Acid value of glutarimide resin obtained from EXAMPLE 1 : 0.583 mmol/g
Acid value of glutarimide resin obtained from COMP. EX.1: 0.625 mmol/g

As a result of measuring optical properties of the polyglutarimides obtained from EXAMPLES 12-14 and COMPARATIVE EXAMPLE 5, introduction of supercritical carbon dioxide improved light transmission and yellowing index.

EXAMPLES 15-17

EXAMPLES 15-17 were carried out as described in EXAMPLE 12, except that glutarimide resins obtained from EXAMPLES 3,7 and 11 using ammonia, isopropyl amine and cyclohexyl amine as imidizing agents, respectively, were used. The following TABLE 5 describes the reaction conditions and the results for the measurement of physical properties.

[TABLE 5]

| | Alkylating agent introduction amount (ml/min.) | Reaction temp. (°C) | Carbon dioxide introduction amount (average) (wt%) | Average carbon dioxide pressure MPa (psi) | | | | Acid value (mmol/g) | Transmission (%T) | Yellow index (YI) | Residual amine (wt%) | Tg (°C) |
|---|---|---|---|---|---|---|---|---|---|---|---|---|
| | | | | Introduction | | Extraction | | | | | | |
| EX. 15 | 2.8 | 300 | 3.5 | 34,5 | 5000 | 15,5 | 2250 | 0.000 (0.667) | 88.5 | 2.7 | 0.000 | 150 |
| EX. 16 | 3.0 | 300 | 3.5 | 34,5 | 5000 | 15 | 2180 | 0.014 (0.712) | 89.7 | 2.4 | 0.008 | 151 |
| EX. 17 | 2.7 | 300 | 3.5 | 34,5 | 5000 | 16 | 2320 | 0.022 (0.640) | 86.7 | 3.1 | 0.014 | 165 |

The extraction temperature in each of EXAMPLES 15, 16 and 17 is 240°C.
The acid value inserted with a round bracket is the acid value before alkylation.

EXAMPLES 18-19 AND COMPARATIVE EXAMPLES 6-7

EXAMPLES 18 and 19 were performed as described in EXAMPLE 12, and COMPARATIVE EXAMPLES 6 and 7 were performed as described in COMPARATIVE EXAMPLE 5, except that the temperature in the extraction zone was varied to monitor the load (torque) applied to the driving system of extruder. The results are reported in the following TABLE 6.

[TABLE 6]

| | Carbon dioxide introduction amount (average) (Wt%) | Average carbon dioxide pressure MPa (psi) | | | | Extraction temp. | Torque (%) | Acid value (mmol/g) | Transmission (%T) | Yellow index (YI) | Residual amine (wt%) | Tg (°C) |
|---|---|---|---|---|---|---|---|---|---|---|---|---|
| | | Introduction | | Extraction | | | | | | | | |
| EX.18 | 3.5 | 34,5 | 5000 | 11,9 | 1730 | 270 | 64 | 0.010 | 88.1 | 3.0 | 0.010 | 153 |
| EX.19 | 3.5 | 34,5 | 5000 | 15 | 2180 | 250 | 79 | 0.009 | 88.3 | 2.9 | 0.011 | 152 |
| COMP. EX.6 | 0 | 0 | 0 | 3,5 | 500 | 270 | 83 | 0.046 | 86.4 | 5.1 | 0.076 | 153 |
| COMP. EX.7 | 0 | 0 | 0 | 0 | 0 | 300 | 61 | 0.039 | 87.0 | 4.5 | 0.042 | 153 |

Reaction temperature is 300°C.
Torque (%) is expressed by the ratio based on the limit load of extruder.

As shown in TABLE 6, the difference of torque values between the above examples and the comparative example demonstrated the fact that supercritical carbon dioxide reduced the viscosity.

## Industrial Applicability

As can be seen from the foregoing, the method for preparing polyglutarimide using supercritical fluid, preferably supercritical carbon dioxide according to the present invention has advantages in that unreacted materials and by-products may be removed more easily than in a conventional method to improve the optical properties of polyglutarimide; melt viscosity of polyglutarimide is reduced so that the extrusion process can be performed at a low temperature, and thus the deterioration of physical properties caused by pyrolysis can be prevented; and the need for an organic solvent is excluded so that the method according to the present invention can be performed as an environmental-friendly process, and carbon dioxide is recovered more easily than in a conventional method using an organic solvent.

## Claims

**1.** A method for preparing a polyglutanimide comprising the steps of:

(a) imidizing an acrylic resin; and
(b) contacting the product obtained from step (a) with a supercritical fluid to extract unreacted materials and by-products.

**2.** The method according to claim 1, wherein the method further comprises step (c) alkylating the reaction product of step (b), after step (b).

**3.** The method according to claim 2, wherein the method further comprises step (d) contacting the reaction product of step (c) with a supercritical fluid to extract unreacted materials and by-products, after step (c).

**4.** The method according to claim 1, wherein the method further comprises step (a') alkylating the reaction product of step (a), between step (a) and step (b).

**5.** The method according to any one of claims 1 to 4, wherein the supercritical fluid is carbon dioxide.

**6.** The method according to claim 5, wherein the supercritical carbon dioxide is used in the amount of 0.1 to 50 wt% based on the weight of the acrylic resin or polyglutarimide.

**7.** The method according to any one of claims 1 to 4, wherein the temperature in the extraction step ranges from 180°C to 300°C.

**8.** The method according to any one of claims 1 to 4, wherein the acrylic resin contains 25 wt% to 100 wt% of ester groups derived from acrylic acid or methacrylic acid.

**9.** The method according to any one of claims 1 to 4, wherein the imidization step (a) is carried out by using an imidizing agent selected from the group consisting of ammonia, a primary amine and a mixture thereof.

**10.** The method according to any one of claims 1 to 4, wherein the method is carried out in a single screw extruder or a multi-screw extruder with two or more screws.

**11.** The method according to claim 10, wherein the method utilizes only one single screw extruder or a multi-screw extruder with two or more screws, or two or more of the said extruders successively.

**12.** The method according to any one of claims 1 to 4, wherein the method comprises preparing a molten polyglutarimide in a device other than an extruder, selected from the group consisting of an autoclave, a continuously recycled tubular reactor, a baffled in-line mixer that may be used successively to an extruder, and solidifying the polyglutarimide resin by an extruder.

## Patentansprüche

1. Verfahren zur Herstellung eines Polyglutarimids mit den folgenden Schritten:

   (a) ein Acrylharz wird imidisiert, und
   (b) das aus Schritt (a) erhaltene Produkt wird zur Extraktion von nicht umgesetzten Stoffen und Nebenprodukten mit einem überkritischen Fluid in Kontakt gebracht.

2. Verfahren nach Anspruch 1, bei dem das Verfahren ferner Schritt (c) umfasst, bei dem nach Schritt (b) das Reaktionsprodukt von Schritt (b) alkyliert wird.

3. Verfahren nach Anspruch 2, bei dem das Verfahren ferner Schritt (d) umfasst, bei dem nach Schritt (c) das Reaktionsprodukt von Schritt (c) zur Extraktion von nicht umgesetzten Stoffen und Nebenprodukten mit einem überkritischen Fluid in Kontakt gebracht wird.

4. Verfahren nach Anspruch 1, bei dem das Verfahren ferner Schritt (a') umfasst, bei dem zwischen Schritt (a) und Schritt (b) das Reaktionsprodukt von Schritt (a) alkyliert wird.

5. Verfahren nach einem der Ansprüche 1 bis 4, bei dem das überkritische Fluid Kohlendioxid ist.

6. Verfahren nach Anspruch 5, bei dem das überkritische Kohlendioxid in einer Menge von 0,1 bis 50 Gew.-%, basierend auf dem Gewicht des Acrylharzes oder Polyglutarimids, verwendet wird.

7. Verfahren nach einem der Ansprüche 1 bis 4, bei dem die Temperatur in dem Extraktionsschritt im Bereich von 180°C bis 300°C liegt.

8. Verfahren nach einem der Ansprüche 1 bis 4, bei dem das Acrylharz 25 Gew.-% bis 100 Gew.-% Estergruppen enthält, die sich von Acrylsäure oder Methacrylsäure ableiten.

9. Verfahren nach einem der Ansprüche 1 bis 4, bei dem der Imidisierungsschritt (a) unter Verwendung eines Imidisierungsmittels durchgeführt wird, das aus der aus Ammoniak, einem primären Amin und einem Gemisch davon bestehenden Gruppe ausgewählt ist.

10. Verfahren nach einem der Ansprüche 1 bis 4, bei dem das Verfahren in einem Einschneckenextruder oder einem Mehrschneckenextruder mit zwei oder mehr Schnecken ausgeführt wird.

11. Verfahren nach Anspruch 10, bei dem bei dem Verfahren nur ein Einschneckenextruder oder ein Mehrschneckenextruder mit zwei oder mehr Schnecken oder zwei oder mehr der Extruder nacheinander eingesetzt wird bzw. werden.

12. Verfahren nach einem der Ansprüche 1 bis 4, bei dem das Verfahren die Herstellung einer Polyglutarimidschmelze in einer anderen Vorrichtung als einem Extruder, die aus der aus einem Autoklaven, einem Rohrreaktor mit kontinuierlicher Rückführung, einem gedrosselten Inline-Mischer, der auf einen Extruder folgend verwendet werden kann, bestehenden Gruppe ausgewählt ist, und die Verfestigung des Polyglutarimidharzes mittels eines Extruders umfasst.

## Revendications

1. Procédé de préparation d'un polyglutarimide, comprenant les étapes suivantes :

   (a) imidization d'une résine acrylique ; et
   (b) mise en contact du produit obtenu dans l'étape (a) avec un fluide supercritique pour extraire des matériaux n'ayant pas réagi et des produits dérivés.

2. Procédé selon la revendication 1, dans lequel le procédé comprend en outre l'étape (c) d'alkyler le produit de réaction de l'étape (b), après l'étape (b).

3. Procédé selon la revendication 2, dans lequel le procédé comprend en outre l'étape (d) de mise en contact du

produit de réaction de l'étape (c) avec un fluide supercritique pour extraire des matériaux n'ayant pas réagi et des produits dérivés, après l'étape (c).

4. Procédé selon la revendication 1, dans lequel le procédé comprend en outre l'étape (a') d'alkyler le produit de réaction de l'étape (a), entre l'étape (a) et l'étape (b).

5. Procédé selon l'une des revendications 1 à 4, dans lequel le fluide supercritique est du dioxyde de carbone.

6. Procédé selon la revendication 5, dans lequel le fluide supercritique est du dioxyde de carbone utilisé dans une quantité de 0,1 à 50 % en poids sur la base du poids de la résine acrylique ou du polyglutarimide.

7. Procédé selon l'une des revendications 1 à 4, dans lequel la température dans l'étape de l'étape d'extraction s'étend de 180°C à 300°C.

8. Procédé selon l'une des revendications 1 4, dans lequel la résine acrylique contient entre 25 % en poids et 100 % en poids de groupes d'esters dérivés d'acide acrylique ou d'acide méthacrylique.

9. Procédé selon l'une des revendications 1 4, dans lequel l'étape d'imidization (a) est effectuée en utilisant un agent d'imidization choisi parmi le groupe constitué par l'ammoniaque, une amine primaire et un mélange de celles-ci.

10. Procédé selon l'une des revendications 1 4, dans lequel le procédé est effectué dans une extrudeuse à une vis ou dans une extrudeuse à vis multiples avec deux vis ou plus.

11. Procédé selon la revendication 10, dans lequel on utilise dans le procédé seulement une extrudeuse à une vis ou une extrudeuse à vis multiples avec deux vis ou plus, ou successivement deux extrudeuses ou plus.

12. Procédé selon l'une des revendications 1 4, dans lequel le procédé comprend la préparation d'un polyglutarimide fondu dans un dispositif autre qu'une extrudeuse, choisi dans un groupe constitué par un autoclave, un réacteur tubulaire à recyclage continu, un mélangeur installé en ligne avec chicanes qui peut être utilisé successivement à une extrudeuse, et la solidification de la résine de polyglutarimide par une extrudeuse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2146209 A
- US 3284425 A
- DE 1077872
- DE 1242369
- GB 926629 A
- GB 1045229 A
- DE 1247517
- DE 2041736
- DE 2047096
- US 5350808 A
- US 4246374 A
- US 4727117 A
- US 5159058 A
- US 5126409 A
- US 0376748 A
- US 5073605 A
- US 4954574 A


### Non-patent literature cited in the description


- **JOSEPH R. ROYER et al.** *Journal of Polymer Science Part B: Polymer Physics,* 2000, vol. 38, 3168
- **MARK D. ELKOVITCH et al.** *Polymer Engineering and Science,* October 1999, vol. 39, 2075
- **MARK D. ELKOVITCH et al.** *Polymer Engineering and Science,* October 2001, vol. 41, 2108
- **RICHARD LEGAY et al.** *Journal of Applied Polymer Science,* 1999, vol. 76, 1876-1888